(19) Europäisches Patentamt / European Patent Office / Office européen des brevets

(11) **EP 4 745 706 A1**

(12) **EUROPEAN PATENT APPLICATION**

(43) Date of publication:
**20.05.2026 Bulletin 2026/21**

(21) Application number: **25214237.7**

(22) Date of filing: **07.11.2025**

(51) International Patent Classification (IPC):
**G05D 9/12** (2006.01) **G05B 13/04** (2006.01)

(52) Cooperative Patent Classification (CPC):
**G05D 9/12; G05B 13/048**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.11.2024 US 202418946412**

(71) Applicant: **Honeywell International Inc.**
**Charlotte, NC 28202 (US)**

(72) Inventor: **LU, Joseph**
**Charlotte, 28202 (US)**

(74) Representative: **Houghton, Mark Phillip**
**Patent Outsourcing Limited**
**1 King Street**
**Bakewell, Derbyshire DE45 1DZ (GB)**

(54) **DYNAMIC INVENTORY TANK CONTROL**

(57) Methods, devices, systems and software products for controlling the properties and volume of materials in a tank having at least one inlet pipe and at least one outlet pipe. Based on whether inlet flows into the tank and outlet flows from the tank are equal, either first or second sets of differential equations are used to determine step responses for use in a model predictive control process, and control actions are determined and executed based on the model predictive control outputs. A determination of whether inlet flows and outlet flows are equal or unequal is made at each iteration.

Figure 1

**Description**

BACKGROUND

Plant wide optimization can provide efficiency and costs savings in industrial plants, such as refineries, chemical processing plants and other facilities. Some facilities include various tanks which are used to receive, hold and/or mix various materials. For example, a refinery may have tanks which are used to receive and hold fuel mix ingredients. Existing control strategies rely on methods that introduce large errors over time, requiring frequent correction and additional activity correcting such errors to maintain the system in a reliable and well understood operating state. The present inventor has identified methods for analytically solving tank volume and quality problems, which enables better tuning of prediction models used in plant wide optimization.

OVERVIEW

The present inventor has identified methods for analytically estimating tank volume and tank content qualities, which enables better tuning of prediction models used in plant wide optimization.

An illustrative, non-limiting example takes the form of a method of controlling a tank, the tank holding a volume of tank material having tank material properties, the tank receiving inlet flow material having inlet flow material properties from at least one inlet flow pipe, and releasing an outlet flow material to at least one outlet flow pipe, the method comprising: determining whether a mass of the inlet flow material equals a mass of the outlet flow material and in response: if the mass of inlet flow material equals the mass of outlet flow material, applying a first set of ordinary differential equations and analytical or numerical solutions thereof to determine a first tank step response model for the tank volume of material and for the properties of the tank material; if the mass of inlet flow material does not equal the mass of outlet flow material, applying a second set of ordinary differential equations and analytical or numerical solutions thereof to determine a second tank step response model for the tank volume of material and for the properties of the tank material; performing a model predictive control process using either the first tank step response model or the second tank step response model to determine control actions for one or more valves or pumps controlling the at least one inlet flow pipe and at least one outlet flow pipe; and executing a first one of the control actions to control flow through the at least one inlet flow pipe or the at least one outlet flow pipe before proceeding to a next time iteration.

Additionally or alternatively, the step of performing the model predictive control process comprises, at a time iteration: computing an unforced prediction of properties of the material in the tank; computing an unforced prediction of volume of the material in the tank; and solving a future control solution to determine the control actions. Additionally or alternatively, the step of executing a first one of the control actions comprises modifying a position of a valve in an inlet flow pipe. Additionally or alternatively, the step of executing a first one of the control actions comprises turning on, turning off, or adjusting a speed of a pump in an inlet flow pipe. Additionally or alternatively, the step of executing a first one of the control actions comprises modifying a position of a valve in an outlet flow pipe. Additionally or alternatively, the at least one inlet flow pipe comprises at least a first inlet flow pipe carrying a first material having first properties, and a second inlet flow pipe carrying a second material having second properties different from the first properties.

Additionally or alternatively, the step of performing the model predictive control process comprises, at a time iteration: converting a first set of variables representing the first properties into a first blending index, and a second set of variables representing the second properties into a second blending index; computing an unforced prediction of properties of the material in the tank using the first blending index and the second blending index; computing an unforced prediction of volume of the material in the tank; solving a future control solution to determine the control actions; and converting the first index back to the first properties and the second index back to the second properties.

Another illustrative and non-limiting example takes the form of a method of controlling a tank, the tank holding a volume of tank material having tank material properties, the tank receiving inlet flow material having inlet flow material properties from at least one inlet flow pipe, and releasing an outlet flow material to at least one outlet flow pipe, the method comprising: receiving an instruction to change the tank material properties; during a first time period, determining that a mass of the inlet flow material does not equal a mass of the outlet flow material and, in response: applying a first set of ordinary differential equations and analytical or numerical solutions thereof to determine a first tank step response model for the tank volume of material and for the properties of the tank material; performing a model predictive control process using the first tank step response model to determine first control actions for one or more valves or pumps controlling the at least one inlet flow pipe and at least one outlet flow pipe; and executing a first one of the first control actions to control flow through the at least one inlet flow pipe or the at least one outlet flow pipe; during a second time period after the first time period, determining that a mass of the inlet flow material does equal a mass of the outlet flow material and, in response: applying a second set of ordinary differential equations and analytical or numerical solutions thereof to determine a second tank step response model for the tank volume of material and for the properties of the tank material; performing a model predictive control process using the second tank step response model to determine second control actions for one or more valves or pumps controlling the at least one inlet flow pipe and at least one outlet flow pipe; and executing a first one of the second control actions to control flow through the at least one inlet flow pipe or the at least one outlet flow pipe.

Additionally or alternatively, the method is performed wherein: during the first time period, at least two iterations of the applying, performing and executing steps are performed; and during the second time period, at least two iterations of the applying, performing and executing steps are performed.

Additionally or alternatively, the step of performing the model predictive control process comprises, at each time iteration: computing an unforced prediction of properties of the material in the tank; computing an unforced prediction of volume of the material in the tank; and solving a future control solution to determine the control actions.

Additionally or alternatively, the step of executing a first one of the first control actions or a first one of the second control actions comprises modifying a position of a valve in an inlet flow pipe. Additionally or alternatively, the step of executing a first one of the first control actions or a first one of the second control actions comprises turning on, turning off, or adjusting a speed of a pump in an inlet flow pipe. Additionally or alternatively, the step of executing a first one of the first control actions or a first one of the second control actions comprises modifying a position of a valve in an outlet flow pipe. Additionally or alternatively, the at least one inlet flow pipe comprises at least a first inlet flow pipe carrying a first material having first properties, and a second inlet flow pipe carrying a second material having second properties different from the first properties.

Additionally or alternatively, the steps of performing the model predictive control process comprise, at a time iteration: converting a first set of variables representing the first properties into a first blending index, and a second set of variables representing the second properties into a second blending index; computing an unforced prediction of properties of the material in the tank using the first blending index and the second blending index; computing an unforced prediction of volume of the material in the tank; solving a future control solution to determine the control actions; and converting the first index back to the first properties and the second index back to the second properties.

Another illustrative and non-limiting example takes the form of a controller for controlling a tank, the tank holding a volume of tank material having tank material properties, the tank receiving inlet flow material having inlet flow material properties from at least one inlet flow pipe, and releasing an outlet flow material to at least one outlet flow pipe, there being at least one flow controlling device in the inlet flow pipe and the at least one outlet flow pipe, the controller configured to: determine whether a mass of the inlet flow material equals a mass of the outlet flow material; and in response: if the mass of inlet flow material equals the mass of outlet flow material, apply a first set of ordinary differential equations and analytical or numerical solutions thereof to determine a first tank step response model for the tank volume of material and for the properties of the tank material; if the mass of inlet flow material does not equal the mass of outlet flow material, apply a second set of ordinary differential equations and analytical or numerical solutions thereof to determine a second tank step response model for the tank volume of material and for the properties of the tank material; perform a model predictive control process using either the first tank step response model or the second tank step response model to determine control actions for one or more valves or pumps controlling the at least one inlet flow pipe and at least one outlet flow pipe; and execute a first one of the control actions before proceeding to a next time iteration by issuing or changing a control signal to the at least one flow controlling device to control flow through the at least one inlet flow pipe or the at least one outlet flow pipe.

Additionally or alternatively, the controller is configured to perform the model predictive control process by, at a time iteration: computing an unforced prediction of properties of the material in the tank; computing an unforced prediction of volume of the material in the tank; and solving a future control solution to determine the control actions.

Additionally or alternatively, the controller is configured to execute a first one of the control actions by: modifying a position of a valve in an inlet flow pipe; or turning on, turning off, or adjusting a speed of a pump in an inlet flow pipe. Additionally or alternatively, the controller is configured to execute a first one of the control actions by modifying a position of a valve in an outlet flow pipe.

Additionally or alternatively, the at least one inlet flow pipe comprises at least a first inlet flow pipe carrying a first material having first properties, and a second inlet flow pipe carrying a second material having second properties different from the first properties, and the controller is configured to perform each model predictive control process by, at a time iteration: converting a first set of variables representing the first properties into a first blending index, and a second set of variables representing the second properties into a second blending index; computing an unforced prediction of properties of the material in the tank using the first blending index and the second blending index; computing an unforced prediction of volume of the material in the tank; solving a future control solution to determine the control actions; and converting the first index back to the first properties and the second index back to the second properties.

Another illustrative and non-limiting example takes the form of a controller for controlling a tank, the tank holding a volume of tank material having tank material properties, the tank receiving inlet flow material having inlet flow material properties from at least one inlet flow pipe, and releasing an outlet flow material to at least one outlet flow pipe, there being at least one flow controlling device in the inlet flow pipe and the at least one outlet flow pipe, the controller configured to execute a method comprising: receiving an instruction to change the tank material properties; during a first time period, determining that a mass of the inlet flow material does not equal a mass of the outlet flow material and, in response:

applying a first set of ordinary differential equations and analytical or numerical solutions thereof to determine a first tank step response model for the tank volume of material and for the properties of the tank material; performing a model predictive control process using the first tank step response model to determine first control actions for one or more valves or pumps controlling the at least one inlet flow pipe and at least one outlet flow pipe; and executing a first one of the first control actions to control flow through the at least one inlet flow pipe or the at least one outlet flow pipe; during a second time period after the first time period, determining that a mass of the inlet flow material does equal a mass of the outlet flow material and, in response: applying a second set of ordinary differential equations and analytical or numerical solutions thereof to determine a second tank step response model for the tank volume of material and for the properties of the tank material; performing a model predictive control process using the second tank step response model to determine second control actions for one or more valves or pumps controlling the at least one inlet flow pipe and at least one outlet flow pipe; and executing a first one of the second control actions to control flow through the at least one inlet flow pipe or the at least one outlet flow pipe.

Additionally or alternatively, the controller is configured such that during the first time period, at least two iterations of the applying, performing and executing steps are performed; and during the second time period, at least two iterations of the applying, performing and executing steps are performed.

Additionally or alternatively, the controller is configured such that the step of performing the model predictive control process comprises, at each time iteration: computing an unforced prediction of properties of the material in the tank; computing an unforced prediction of volume of the material in the tank; and solving a future control solution to determine the control actions.

Additionally or alternatively, the controller is configured such that the step of executing a first one of the first control actions or a first one of the second control actions comprises modifying a position of a valve in an inlet flow pipe.

Additionally or alternatively, the controller is configured such that the step of executing a first one of the first control actions or a first one of the second control actions comprises turning on, turning off, or adjusting a speed of a pump in an inlet flow pipe.

Additionally or alternatively, the controller is configured such that the step of executing a first one of the first control actions or a first one of the second control actions comprises modifying a position of a valve in an outlet flow pipe.

Additionally or alternatively, the at least one inlet flow pipe comprises at least a first inlet flow pipe carrying a first material having first properties, and a second inlet flow pipe carrying a second material having second properties different from the first properties.

Additionally or alternatively, the controller is configured such that the steps of performing the model predictive control process comprise, at a time iteration: converting a first set of variables representing the first properties into a first blending index, and a second set of variables representing the second properties into a second blending index; computing an unforced prediction of properties of the material in the tank using the first blending index and the second blending index; computing an unforced prediction of volume of the material in the tank; solving a future control solution to determine the control actions; and converting the first index back to the first properties and the second index back to the second properties.

Further non-limiting, illustrative example takes the form of a non-transitory, computer-readable medium including instructions that when executed by a processor cause the processor to perform a method or methods of controlling a tank, the tank holding a volume of tank material having tank material properties, the tank receiving inlet flow material having inlet flow material properties from at least one inlet flow pipe, and releasing an outlet flow material to at least one outlet flow pipe, the method being as recited in any of the preceding method examples.

This overview is intended to introduce the subject matter of the present patent application. It is not intended to provide an exclusive or exhaustive explanation. The detailed description is included to provide further information about the present patent application.

BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

Figure 1 illustrates aspects of a petroleum refinery;

Figure 2 shows an illustrative tank with a single inlet pipe and single outlet pipe;

Figure 3 illustrates pseudocode for an example;

Figure 4 shows an illustrative tank with multiple inlet pipes and multiple outlet pipes;

Figure 5 is a graph showing changes in tank contents over time;

Figures 6-7 are block flow diagrams for illustrative methods;

Figure 8 is a graph comparing illustrative analyses; and

Figure 9 is a block flow diagram for a method.

DETAILED DESCRIPTION

Plant wide optimization can provide efficiency and cost savings in industrial plants, such as refineries, chemical processing plants and other facilities. Some facilities include various tanks which are used to receive, hold and/or mix various materials. For example, a refinery may have tanks which are used to receive and hold fuel mix ingredients. Existing control systems for such tanks may use Euler approximations to estimate the effect of flows into and out of tanks. Such a simplification can be a reasonable approximation on short time frames, however, the error associated with the use of the Euler approximation is proportional to the square of the step size, and so over longer time steps or prediction horizons, errors can become quite significant. Complex correction methods are known and can be used to reduce errors, however, such corrections complicate the task of plant wide optimization, as by requiring modification, retuning and/or reformulation of control problems used, for example, in performing plant wide optimization by model predictive control.

Some prior approaches may address errors that simplifications introduce by adding manual processes to check status and parameters, however, these steps add to the cost and complexity of the system. Further, any such checks and manual steps may introduce additional error sources. Moreover, in a complex plant environment, a manual check step will only update a small amount of data in a larger scheme. System properties may change faster than manual inputs can be made across the whole plant. Thus, improving the accuracy of modelling is a high value project.

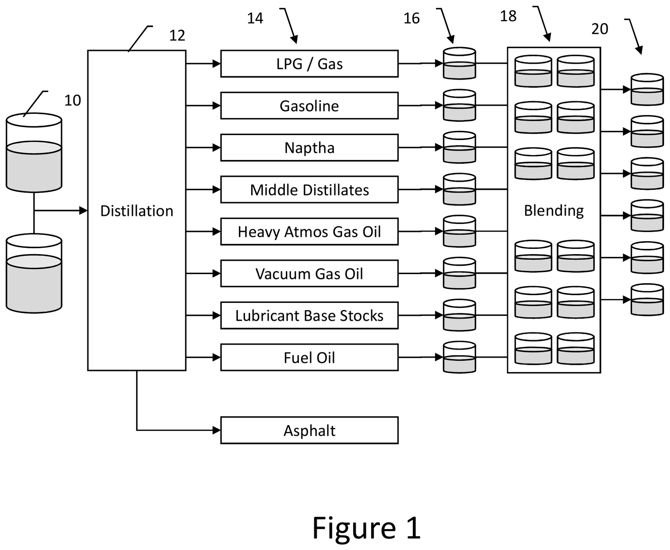

Figure 1 shows an illustrative petroleum refinery at a very high level. Crude oil is held in tanks 10 and goes through a distillation process 12. Numerous outputs 14 can be obtained from distillation 12, such as liquified petroleum gas (LPG), gasoline, naphtha, middle distillates, heavy atmospheric gas oil, vacuum gas oil, lubricant base stocks, and fuel oil. These outputs or intermediate products may undergo various additional processes before being stored in intermediate tanks 16. The actual outputs of the refinery are generated in a blending stage 18, which uses a number of tanks to mix the intermediate products and/or additives, to yield the final products 20. The blending processes 18 include the application of various recipes to yield the final output products, and make use of a number of valves, pumps and tanks to transport, hold and control the inputs and outputs of the blending processes.

Final output products may include a range of materials. Some illustrative final products include refinery fuel gas, liquefied petroleum gas, regular gasoline, premium gasoline, solvents, aviation fuels, diesels, heating oils, lubricant oils, greases, asphalts, industrial fuels, refinery fuel oil. Which products are made at any given time are subject to economic decisions by the plant operator, including costs and availability of the internal products from the distillation process, costs of additives, and demand for the outputs 20, which vary by the actual product.

While a refinery is shown in Figure 1, the present innovations may also be used in other contexts, particularly those involving the management of a tank or a system of tanks with pipes inputting material thereto. Chemical plants are one example, but water management (wastewater or clean water) systems may also use these analytical methods to control and/or enhance any of efficiency, throughput, or control over processes.

Control signals generated in the following discussion would be applied to valves, pumps, and any other suitable control mechanisms for managing flow of material through pipes going into, or out of, a tank. Other control signals can also be generated including signals suitable for controlling temperature or other properties in a tank or pipe. Signal outputs may also include alerts or alarms, as needed in a given environment, plant or the like.

Over the past several decades, model predictive control has become the standard multivariable control solution for many industries. The widespread use of model predictive control has set a foundation for a more economically significant advancement, namely closed-loop plantwide optimization. However, many technical, workflow, and user-experience challenges exist in attempting to provide closed-loop plantwide optimization for most industries. As a result, open-loop plantwide optimization, commonly known as production planning, is still performed. In practice, plantwide planning optimization is rarely if ever implemented as part of a closed-loop control system. In fact, in many industries, planning results are often manually (and hence non-optimally) adjusted through mediating instruments such as daily operator instruction sheets. Because of this, a significant amount of manufacturing profit remains unobtainable.

In some industries, a mediating solution layer, such as an open-loop production scheduler, has been devised to disaggregate a production plan into smaller executable pieces. This scheduler assists the translation of a planning solution into operator actions, but it does not eliminate manual adjustments. In other industries, an open-loop production scheduler has been used in place of production planning, but its output targets are often manually adjusted, as well.

The practice of manually adjusting an open-loop solution often stems from the need to translate or revise high-level production targets in order to (i) satisfy low-level (possibly safety-related) control constraints in process units and (ii) compensate for disturbances to production inventories or product qualities (called "unplanned events" in planning terminology). The technical difficulties involved in manual translation, to a large extent, coincide with the difficulties involved in integrating multi-level solutions that use models at different scales.

As used herein, the phrases "plantwide optimization" or "plantwide control" refers to optimization or control of multiple units in an industrial facility, regardless of whether those multiple units represent every single unit in the industrial facility. It is contemplated that less than all of a particular plant can be optimized by the processes described herein. It may be sufficient to manage a single tank. Some examples may manage multiple tanks in series using a set of collected optimization problems determined in a hierarchical manner, such as from top-down or from bottom-up, as suitable to the particulars of a given installation.

With model predictive control functions, the distance to target or reference values for the one or more output values (or resulting operating characteristics) is minimized, thus optimizing performance. As an example, a traditional model predictive control cost function formation may be as shown in Equation 1:

$$J_{MPC} = min \ \sum_{k=1}^{P} \left\| y_{r,k} - y_k \right\|_{W_1} + \left\| u_{d,k} - u_k \right\|_{W_2} \qquad [\text{Eq. 1}]$$

Where $u_{d,k}$ corresponds to the desired profile for the manipulated variable, $u_k$ stands for the manipulated variable, k denotes discrete time instance, and P stands for the prediction horizon of the predictive controller. In this example, $y_{r,k}$ represents output reference values, and $y_k$ represents predicted values provided according to mathematical modelling of the physical plant to be controlled during the relevant time horizon. In addition, $W_1$ and $W_2$ specify weighting terms. The traditional model predictive control cost function is minimized in operation in order to provide optimal control to the physical plant.

The Euler approximation may be integrated into the model predictive control system as a step function approximation, where the step function is used when calculating the cost function over the time horizon. At each time instance in the model predictive control analysis, the step function (Euler approximation) is used to estimate and update values in the controlled system. While model predictive control generally only implements the control actions calculated for the first time instance before starting over with the next calculation, the calculated optimal control actions are based on the use of the Euler approximation over the whole time horizon. The result may be suboptimal, because the costs of the control actions over the time horizon become more and more inaccurate with each time instance of the step function. That is, the error caused by the Euler approximation increases as the calculations extend through the time horizon. Greater accuracy is desired.

Model predictive control is implemented in a controller. Some physical plants may cascade plural model predictive controllers to manage down from a high-level control solution to lower levels, allowing the control problem to be broken into multiple layers which are each relatively simpler than a single unified solution. Some plants may include one or more model predictive controllers that generate control signals passed down to other controller types, such as proportional-integral-derivative controllers and/or other controllers which, for example, receive a setpoint for a particular item to be controlled (actuator, valve, motor, etc.) and control the manipulated item to the setpoint.

The controller may take many forms, including, for example, a microcontroller or microprocessor, coupled to a memory storing readable instructions for performing methods as described herein, as well as providing configuration of the controller for the various examples that follow. The controller may include one more application-specific integrated circuits (ASIC) to provide additional or specialized functionality, such as, without limitation a signal processing ASIC that can filter received signals from one or more sensors using digital filtering techniques. Logic circuitry, state machines, and discrete or integrated circuit components may be included as well. The skilled person will recognize many different hardware implementations are available for a controller. The controller may, for example, be implemented as a computer.

It should be noted that the following discussion focuses on the use of continuous equations and solutions thereto. Once the problems are defined in the general sense, discretization is performed using known methods for discretizing the equations, including ordinary differential equations. The skilled artisan will recognize the tradeoffs inherent in selecting the discretization intervals (coarse to fine) and resultant computational burdens associated with discretization. That is, while finer discretization may provide higher accuracy, the computational burden increases with smaller step sizes.

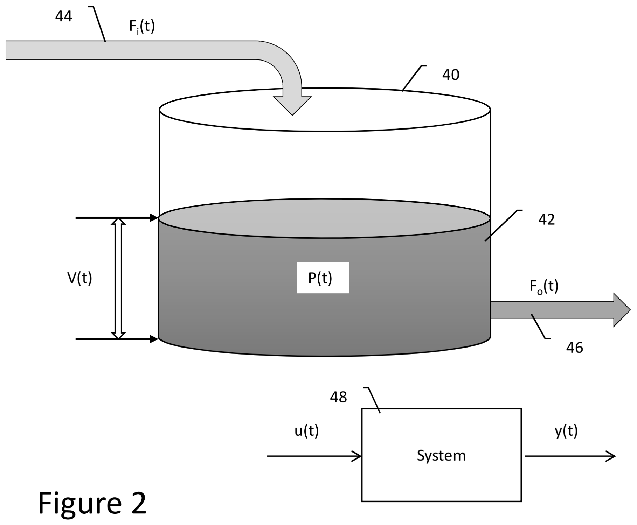

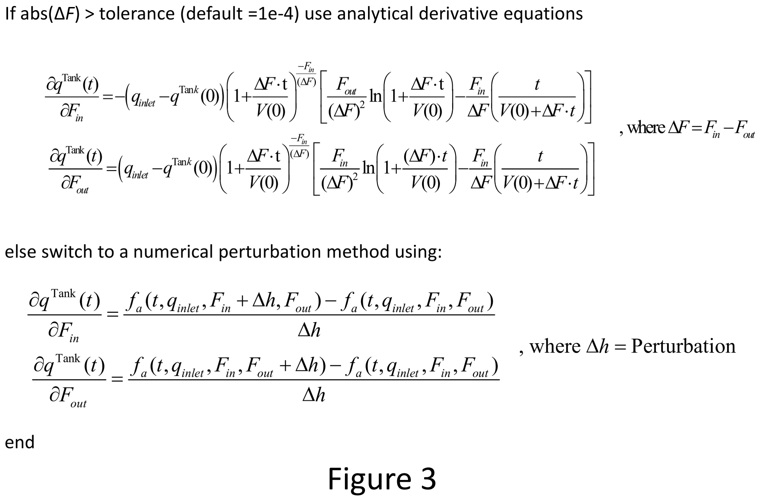

In the blending stage of the refinery, as well as in earlier stages in which outputs of the distilling process are manipulated by mixing together and/or combining with additives, problems are presented for determining the contents of tanks, including determining volume of material in the tank as well as the constituents thereof. The control problem can be illustrated by reference to Figures 2 and 3.

Figure 2 shows an illustrative tank with a single inlet pipe and single outlet pipe. The tank 40 has a volume of material 42. At any given point in time, the volume of material is represented as V(t), and the actual material properties or blend are represented here as P(t), both functions of time as well as of the material introduced into and removed from the tank. A tank inlet pipe is shown at 44, and adds material, $F_i$(t), having material properties and volume per unit time. A tank outlet pipe is shown at 46, and removes material, $F_o$(t), having material properties and volume per unit time. The tank contents may be characterized as a hybrid model:

$$G \cdot u = \begin{bmatrix} G_F \\ G_q \end{bmatrix} \cdot u \ , u = \text{conjoint MVs} \qquad \{\text{Eq. 2}\}$$

Where $G_F$ is the model partition for the component flow rates, and $G_q$ is the model partition for the component flow quality. The control variable, u, is a conjoint multi-variable representation of the various control actions. Two Euler approximations of the flow derivatives can be used to track properties of the contents of the tank:

$$P(t + dt) = \frac{P(t)V(t)+P_i(t)F_i(t)dt}{(V(t)+F_i(t)dt)} \qquad \{\text{Eq. 3}\}$$

Here, the inlet amount $F_i$(t)·dt having properties $P_i$(t) is added with the tank inventory first, and then the outlet amount $F_o$(t)·dt having blended properties is allowed to exit. The other Euler approximate operates in the opposite way:

$$P(t + dt) = \frac{P(t)(V(t)-F_0(t)dt)+P_i(t)F_i(t)dt}{(V(t)+F_i(t)dt-F_0(t)dt)} \qquad \{\text{Eq. 4}\}$$

With this second approximation, the outlet amount $F_o$(t)·dt having properties P(t) exits the tank first, and the inlet amount $F_i$(t)·dt is then added to yield the updated blend in the tank. In the physical world, both intake and outlet actions are occurring at the same time, however. These two approximations are nearly equal when the step size, dt, is very small. However, as step size grows, the approximations are no longer equivalent. One issue is that the mixing properties are not instantaneous through the entire tank, so that the properties of material entering the tank do not immediately affect properties of the materials leaving the tank, and the Euler approximations cease to be accurate as the time sample duration increases and/or is repeated.

Taking the special case of Figure 2, as shown at 48, the system can be understood as receiving inputs u(t) and generating an output y(t). For one inlet pipe and one outlet pipe, the mass balance is given by:

$$\frac{dV}{dt} = F_{in} - F_{out} \qquad \{\text{Eq. 5}\}$$

Next, the linear property blending equations can be stated, and the mass balance substituted in:

$$\frac{d(q_j^{Tank}V)}{dt} = q_j F_{in} - q_j^{Tank} F_{out} \qquad \{\text{Eq. 6}\}$$

$$q_j^{Tank} \frac{dV}{dt} + V \frac{dq_j^{Tank}}{dt} = q_j F_{in} - q_j^{Tank} F_{out} \qquad \{\text{Eq. 7}\}$$

$$V \frac{dq_j^{Tank}}{dt} = (q_j - q_j^{Tank})F_{in} \qquad \{\text{Eq. 8}\}$$

If the input u(t) controls the incoming fluid properties, $q_i$:

$$V \frac{dq_j^{Tank}}{dt} + q_j^{Tank} F_{in} = q_j F_{in} \qquad \{\text{Eq. 9}\}$$

Which can then be restated using y(t) and u(t) notation as:

$$V \frac{dy(t)}{dt} + F_{in} y(t) = F_{in} u(t) \qquad \{\text{Eq. 10}\}$$

$$q_j^{\text{tank}}(s) = \frac{1}{\tau_v \cdot s + 1} q_j(s) \quad \text{where } \tau_v = \frac{V}{F_{in}} \quad \{\text{Eq. 11}\}$$

If, instead, the inlet pipe flow, $F_{in}$, is used as the input u(t):

$$V \frac{dq_j^{Tank}}{dt} + q_j^{Tank} F_{in} = q_j F_{in} \qquad \{\text{Eq. 12}\}$$

Which can then be restated using y(t) and u(t) notation as:

$$V \frac{dy(t)}{dt} + u(t) y(t) = q_j u(t) \qquad \{\text{Eq. 13}\}$$

$$V \frac{dy(t)}{dt} = (q_j - y(t)) u(t) \qquad \{\text{Eq. 14}\}$$

The resulting general equations are:

$$\begin{cases} V \dfrac{dq_j^{Tank}}{dt} = (q_j - q_j^{Tank}) F_{in} \\ \dfrac{dV}{dt} = F_{in} - F_{out} \end{cases} \qquad \{\text{Eq. 15(a) and 15(b)}\}$$

Equation 15(a) indicates the changes in the qualities, $q^{Tank}$, of the tank contents. Qualities may include any suitable measurable parameter, such as percentage concentrations of the various components of a blend or mix.

Converting the general formulas for use as the tank step response, given a non-linear tank property system, with inflow $F_{in}$, having inflow properties $q_{inlet}$, and an outflow $F_{out}$, the general formulas take the form:

$$\begin{cases} V(t) \dfrac{dq^{Tank}(t)}{dt} = (q_{inlet} - q^{Tank}(t)) F_{in} \\ \dfrac{dV(t)}{dt} = F_{in} - F_{out} \end{cases} \qquad \{\text{Eqs. 16(a) and 16(b)}\}$$

The qualities of the outflow are equal to the tank qualities, $q^{Tank}$ in these formulas. The step function is used in the model predictive control calculated to determine changes occurring in the forward looking time horizon, from one time instance to the next. The second differential equation, that is, Equation 17, can be solved as:

$$V(t) = V(0) + (F_{in} - F_{out}) \cdot t \qquad \{\text{Eq. 17}\}$$

Thus the volume at time t is given in straightforward fashion. Using this to rearrange the general formula for the tank step response:

$$\frac{dq^{tank}(t)}{(q_{inlet} - q^{Tank}(t))} = F_{in} \frac{dt}{V(0) + (F_{in} - F_{out}) \cdot t} \qquad \{\text{Eq. 18}\}$$

Equation 18 is a separable ordinary differential equation, however it contains a potential singularity if $F_{in}$ and $F_{out}$ are equal, requiring the solution to be stated in terms of two use cases. In a first case, $F_{in}$ does not equal $F_{out}$. Here, the integration is handled as follows:

$$-ln(\,q_{inlet} - q^{Tank}(t))\Big|_{q^{Tank}(0)}^{q^{Tank}(t)} = \frac{F_{in}}{(F_{in}-F_{out})} ln(V(0) + (F_{in} - F_{out}) \cdot t)\Big|_0^t \qquad \{Eq.\ 19\}$$

Next, evaluating Equation 19 at times 0 and t:

$$- ln\left(\frac{q_{inlet}-q^{Tank}(t)}{q_{inlet}-q^{Tank}(0)}\right) = \frac{F_{in}}{(F_{in}-F_{out})} ln\left(\frac{V(0)+(F_{in}-F_{out})\cdot t}{V(0)}\right) \qquad \{Eq.\ 20\}$$

And, reversing the denominator on the right and changing the sign on the left:

$$ln\left(\frac{q_{inlet}-q^{Tank}(t)}{q_{inlet}-q^{Tank}(0)}\right) = \frac{F_{in}}{(F_{out}-F_{in})} ln\left(\frac{V(0)+(F_{in}-F_{out})\cdot t}{V(0)}\right) \qquad \{Eq.\ 21\}$$

Taking the exponent on both sides:

$$\frac{q_{inlet}-q^{Tank}(t)}{q_{inlet}-q^{Tank}(0)} = \left(\frac{V(0)+(F_{in}-F_{out})\cdot t}{V(0)}\right)^{\frac{F_{in}}{(F_{out}-F_{in})}} \qquad \{Eq.\ 22\}$$

Then, solving for the material qualities in the tank at time t:

$$q^{Tank}(t) = q_{inlet} - (q_{inlet} - q^{Tank}(0))\left(1 + \frac{(F_{in}-F_{out})\cdot t}{V(0)}\right)^{\frac{F_{in}}{(F_{out}-F_{in})}}$$

$$\{Eq.\ 23\}$$

Recall again the entry condition of unequal mass flows in and out, which ensures that the exponent at the end of Equations 23 and 24 avoids a divide-by-zero condition. If, instead, the (mass) flow in and (mass) flow out are equal, Equation 18 can be analyzed differently. Starting again with Equation 18:

$$\frac{dq^{Tank}(t)}{(q_{inlet}-q^{Tank}(t))} = F_{in} \frac{dt}{V(0)+(F_{in}-F_{out})\cdot t} \qquad \{Eq.\ 18\ \text{-}\ copy\}$$

When Fin = Fout, first:

$$-ln(\,q_{inlet} - q^{Tank}(t))\Big|_{q^{Tank}(0)}^{q^{Tank}(t)} = \frac{F_{in}}{V(0)} t\,\Big|_0^t \qquad \{Eq.\ 24\}$$

Then evaluating both sides for times 0 and t:

$$- ln\left(\frac{q_{inlet}-q^{Tank}(t)}{q_{inlet}-q^{Tank}(0)}\right) = \frac{F_{in}}{V(0)} t \qquad \{Eq.\ 25\}$$

And:

$$ln\left(\frac{q_{inlet}-q^{Tank}(t)}{q_{inlet}-q^{Tank}(0)}\right) = -\frac{F_{in}}{V(0)} t \qquad \{Eq.\ 26\}$$

Using the exponent:

$$\frac{q_{inlet}-q^{Tank}(t)}{q_{inlet}-q^{Tank}(0)} = exp\left(-\frac{F_{in}}{V(0)}t\right) \quad \{Eq.\ 27\}$$

Solving for the tank qualities at time t:

$$q^{Tank}(t) = q_{inlet} - \left(q_{inlet} - q^{Tank}(0)\right)exp\left(-\frac{F_{in}}{V(0)}t\right) \quad \{Eq.\ 28\}$$

These two approaches can then be combined to provide the analytic solution of the tank step response model. First, the two ordinary differential equation cases provide the tank property dynamic response:

$$q^{Tank}(t) =$$

$$\begin{cases} f_a(t,q_{inlet},F_{in},F_{out}) = q_{inlet} - \left(q_{inlet} - q^{Tank}(0)\right)\left(1 + \frac{(F_{in}-F_{out})\cdot t}{V(0)}\right)^{\frac{-F_{in}}{(F_{in}-F_{out})}} \\ f_b(t,q_{inlet},F_{in},F_{out}) = q_{inlet} - \left(q_{inlet} - q^{Tank}(0)\right)exp\left(-\frac{F_{in}}{V(0)}\cdot t\right) \end{cases}$$

$$\{Eq.\ 29\}$$

Within Equation 29, function $f_a$ is for the first case, in which the $F_{in}$ is not equal to $F_{out}$. Function $f_b$ is for the second case, in which $F_{in}$ and $F_{out}$ are equal. As used in this respect, equal or unequal may be determined by comparing the difference between $F_{in}$ and $F_{out}$ to a marginal value.

The step response models can then be stated as:

$$\frac{\partial q^{Tank}(t)}{\partial q_{inlet}} = \begin{cases} \frac{\partial f_a(t)}{\partial q_{inlet}} = 1 - \left(1 + \frac{\Delta F \cdot t}{V(0)}\right)^{\frac{-F_{in}}{(\Delta F)}} &, \forall\ F_{in} \neq F_{out} \\ \frac{\partial f_b(t)}{\partial q_{inlet}} = 1 - exp\left(-\frac{F_{in}}{V(0)}t\right) &, \forall\ F_{in} = F_{out} \end{cases}$$

$$\{Eq.\ 30(a)\ and\ 30(b)\}$$

Where Equations 30(a) and 30(b) are written using the substitution of $\Delta F = F_{in} - F_{out}$, to shorten the notation. Next:

$$\frac{\partial q^{Tank}(t)}{\partial F_{in}} =$$

$$\begin{cases} \frac{\partial f_a(t)}{\partial F_{in}} = -\left(q_{inlet} - q^{tank}(0)\right)\left(1 + \frac{\Delta F \cdot t}{V(0)}\right)^{\frac{-F_{in}}{(\Delta F)}}\left[\frac{F_{out}}{(\Delta F)^2}ln\left(1 + \frac{\Delta F \cdot t}{V(0)}\right) - \frac{F_{in}}{\Delta F}\left(\frac{t}{V(0)+\Delta F \cdot t}\right)\right] \\ \frac{\partial f_b(t)}{\partial F_{in}} = \frac{\left(q_{inlet}-q^{Tank}(0)\right)\cdot t}{V(0)}exp\left(-\frac{F_{in}}{V(0)}t\right) \end{cases}$$

$$\{Eq.\ 31\}$$

Again using the substitution of $\Delta F = F_{in} - F_{out}$, and also noting again that $f_a$ is the function for use when $\Delta F$ is non-zero, and $f_b$ is the function for use otherwise. Finally:

$$\frac{\partial q^{\text{Tank}}(t)}{\partial F_{out}} =$$

$$\begin{cases} \frac{\partial f_a(t)}{\partial F_{out}} = (q_{inlet} - q^{Tank}(0))\left(1 + \frac{\Delta F \cdot t}{V(0)}\right)^{\frac{-F_{in}}{(\Delta F)}}\left[\frac{F_{in}}{(\Delta F)^2}\ln\left(1 + \frac{(\Delta F)\cdot t}{V(0)}\right) - \frac{F_{in}}{\Delta F}\left(\frac{t}{V(0)+\Delta F\cdot t}\right)\right] \\ \frac{\partial f_b(t)}{\partial F_{out}} = 0 \end{cases}$$

{Eq. 32}.

Again using the substitution of $\Delta F = F_{in} - F_{out}$, and also noting again that $f_a$ is the function for use when $\Delta F$ is non-zero, and $f_b$ is the function for use otherwise.

Figure 3 illustrates an approach to avoiding the potential singularity in the preceding step response models using pseudocode (adapted for Matlab). The analytic solution for the tank step response model uses a hybrid method to avoid the singularity. Here, a tunable tolerance is set, for example at a relatively small number of 0.0001 as default. Additional adjustments can be made to avoid the numerical problem of dividing by a value (such as $\Delta F$) that is close to zero.

The function, $\Delta F$ is defined as the difference between inflow, $F_{in}$ and outflow, $F_{out}$. When the absolute value of $\Delta F$ is greater than the tolerance, the step function for unequal mass flows is used, and when the absolute value of $\Delta F$ is less than the tolerance, the step function for equal flows is used, as shown in Figure 3. Moreover, when $\Delta F$ is greater than the tolerance, the analytical derivative equations are used. In contrast, when $\Delta F$ is less than or equal to the tolerance, a numerical perturbation method is used, as shown, with the $\Delta h$ value introduced as the perturbation.

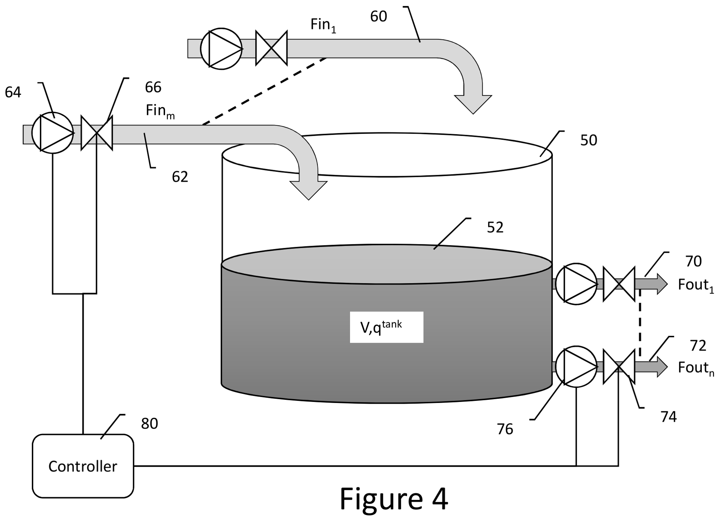

As noted the preceding uses the special case of one inlet pipe and one outlet pipe. Figure 4 shows an illustrative tank with multiple inlet pipes and multiple outlet pipes. Here, the tank 50 has contents 52 with volume, V, and qualities, $q^{tank}$. First and second inlet pipes are shown at 60, 62, each carrying a quantity of inlet product, $F_{in1}$ and $F_{in2}$, respectively, having qualities $q_{in1}$ and $q_{in2}$, respectively. Control devices are illustratively shown as well, including pump 64 and valve 66, each of which is coupled to a controller 80. Likewise, multiple outlet pipes are provided, as shown at 70, 72, each carrying a quantity of outlet product, $F_{out1}$ and $F_{out2}$, and having the same qualities, $q^{tank}$, as the tank content. The control devices 64, 66, 74, 76 may be present on all or only some of the inlet and/or outlet pipes 60, 62, 70, 72 and it is not necessary to have each of a valve and pump on any given pipe 60, 62, 70, 72. Again, a controller 80 is coupled to outlet flow control devices which may include for example and without limitation valves 74 and/or pumps 76.

Measurement or estimation throughout the system can include various approaches. For example, liquid flow through a valve can be modeled by using a model of the valve, as well as the state and viscosity of fluid flowing through the valve, and additional details of the valve size, type and also pipe connections. Flow measurement may instead use a flowmeter of any suitable type, including without limitation, obstruction type, inferential, electromagnetic, fluid dynamic, anemometer, ultrasonic flow meter, mass flow meter (Coriolis force), or other types. Likewise, flow through a pump may also be estimated using parameters including pump speed, pump power, the state and viscosity of the fluid, pipe and pump size, etc.

The qualities of the fluid flowing in the pipe are integrated into any estimation of the quantity that is flowing. As a result, the overall model and control system, even with measurement devices located in numerous locations, would still be subject to error if estimated properties of the fluid itself are erroneous. Going back to the idea of taking manual measurements, to obtain an adequate baseline to minimize errors requires operating the plan in a static manner long enough to allow fluid properties throughout to stabilize for a period long enough that those fluid properties could be determined by manual measurement. Doing so would represent an addition to the requirements of the overall system, and is not consistent with an agile or nimble process. An improved ability to estimate fluid properties and flows is desired.

Symbols used in the Figures are not intended to be limiting to any particular valve, pump, pipe, and/or tank type or structure and are instead representative of generic valves, pumps, pipes and/or tanks, respectively. Connections between the controller and valves or pumps in Figure 3 are not intended to be limiting to those shown nor to any particular type of connection, and are merely illustrative of some of the connections that may or would be present. Wired or wireless control signals may be used, and more connections than those shown would be present in any actual system.

For example, connections used to control a valve may include each of a control line, power, ground, and feedback. A valve may be controlled using an applied control value, with an actuator for the valve using any suitable feedback to determine whether actuation has resulted in the desired valve position. For example, visual feedback or position sensing may be used to determine whether an applied signal to the valve actuator has resulted in desired valve positioning.

For the general case with multiple pipes into and out of the tank, the mass balance in the tank is given by:

$$\frac{dV}{dt} = \sum_{i=1}^{m} F_{in_i} - \sum_{i=1}^{n} F_{out_i} \qquad \{\text{Eq. 33}\}$$

Where each of i=1 to m is an inlet pipe, and j=1 to n is an outlet pipe. Next, the linear property blending equations, which are based on concentrations and assume no interaction between the constituents, are given by:

$$\frac{d(q_j^{Tank}V)}{dt} = \sum_{i=1}^{m} q_{j,i} F_{in_i} - q_j^{Tank} \sum_{i=1}^{n} F_{out_i} \qquad \{\text{Eq. 34}\}$$

$$q_j^{Tank} \frac{dV}{dt} + V \frac{dq_j^{Tank}}{dt} = \sum_{i=1}^{m} q_{j,i} F_{in_i} - q_j^{Tank} \sum_{i=1}^{n} F_{out_i} \qquad \{\text{Eq. 35}\}$$

$$V \frac{dq_j^{Tank}}{dt} = \sum_{i=1}^{m} (q_{j,i} - q_j^{Tank}) F_{in_i} \qquad \{\text{Eq. 36}\}$$

Where the third formula substitutes the mass balance equation into the concentration equation, and moves flow terms to the right hand side.

The result is two simultaneous ordinary differential equations:

$$\begin{cases} V \dfrac{dq_j^{Tank}(t)}{dt} = \sum_{i=1}^{m} \left( q_{j,i} - q_j^{Tank}(t) \right) F_{in_i} \\ \dfrac{dV(t)}{dt} = \sum_{i=1}^{m} F_{in_i} - \sum_{k=1}^{n} F_{out_k} \end{cases} \qquad \{\text{Eqs. 37-38}\}$$

And the following are understood:

$$\tau_v = \frac{V}{sum(F_{in})} \qquad \{\text{Eq. 39}\}$$

$$sum(F_{in}) = \sum_{i=1}^{m} F_{in_i} \qquad \{\text{Eq. 40}\}$$

In which tau is the time constant of the tank quality when volume is maintained at a constant. Note that tau may be given as a value in minutes. For the analytic solution to the tank step response model, the inflow, $F_{in}$, outflow, $F_{out}$, and inflow properties, $q_{inlet}$ can be treated as parameters, and so the change in tank properties can be as shown here:

$$V \frac{dq_j^{Tank}(t)}{dt} = \sum_{i=1}^{m} \left( q_{j,i} - q_j^{Tank}(t) \right) F_{in_i} = \sum_{i=1}^{m} q_{j,i} F_{in_i} -$$

$$\left( \sum_{i=1}^{m} F_{in_i} \right) \cdot q_j^{Tank}(t) = qDotF_{in} - SumF_{in} \cdot q_j^{Tank}(t) \qquad \{\text{Eq. 41}\}$$

And the change in tank volume is determined in this equation:

$$\frac{dV(t)}{dt} = \sum_{i=1}^{m} F_{in_i} - \sum_{k=1}^{n} F_{out_k} = SumF_{in} - SumF_{out} = \Delta SumF \qquad \{\text{Eq.42}\}$$

As before, the second differential equation can be solved first by integration:

$$V(t) = V(0) + \Delta SumF \cdot t \qquad \{\text{Eq. 43}\}$$

Substituting Equation 43 into Equation 41 and rearranging:

$$\frac{dq^{Tank}(t)}{qDotF_{in}-SumF_{in}\cdot q_j^{Tank}(t)} = \frac{dt}{V(0)+\Delta SumF\cdot t} \text{ where } \Delta SumF = SumF_{in} - SumF_{out} \quad \{Eq.\ 44\}$$

Equation 44 is a separable ordinary differential equation which can be integrated separately. To avoid the singularity issues, as before, two solutions are taken. When ΔSumF is not equal to zero (or, in the alternative, exceeds a minimum value), analytical derivation is used, as follows. First:

$$-\frac{1}{SumF_{in}} ln(\ q\cdot F_{in} - SumF_{in}\cdot q_j^{Tank}(t))\Big|_{q^{Tank}(0)}^{q^{Tank}(t)} =$$

$$\frac{1}{\Delta SumF} ln(V(0) + \Delta SumF\cdot t)\Big|_0^t \quad \{Eq.\ 45\}$$

Rearranging and taking the integral:

$$ln\left(\frac{q\cdot F_{in}-SumF_{in}\cdot q_j^{Tank}(t)}{q\cdot F_{in}-SumF_{in}\cdot q_j^{Tank}(0)}\right) = \frac{-SumF_{in}}{\Delta SumF} ln\left(\frac{V(0)+\Delta SumF\cdot t}{V(0)}\right) \quad \{Eq.\ 46\}$$

Next, the exponent is taken on both sides:

$$\frac{q\cdot F_{in}-SumF_{in}\cdot q_j^{Tank}(t)}{q\cdot F_{in}-SumF_{in}\cdot q_j^{Tank}(0)} = \left(\frac{V(0)+\Delta SumF\cdot t}{V(0)}\right)^{\frac{-SumF_{in}}{\Delta SumF}} \quad \{Eq.\ 47\}$$

Rearranging the variables to extract the tank properties at time t:

$$q_j^{Tank}(t) = \frac{q\cdot F_{in}}{SumF_{in}} - \left(\frac{q\cdot F_{in}}{SumF_{in}} - q_j^{Tank}(0)\right)\left(1 + \frac{\Delta SumF\cdot t}{V(0)}\right)^{\frac{-SumF_{in}}{\Delta SumF}} \quad \{Eq.\ 48\}$$

And finally:

$$q^{Tank}(t) = \bar{q}_{inlet} - (\bar{q}_{inlet} - q^{Tank}(0))\left(1 + \frac{\Delta SumF\cdot t}{V(0)}\right)^{\frac{-SumF_{in}}{\Delta SumF}}, \text{ where } \bar{q}_{inlet} = \frac{\sum_{inlet\ i=1}^{i=m} q_i F_{in_i}}{\sum_{i=1}^{m} F_{in_i}} = \frac{q\cdot F_{in}}{SumF_{in}} \quad \{Eq.\ 49\}$$

For the remaining case, in which ΔSumF is equal to zero (or, in the alternative, does not exceed a minimum value), then:

$$-\frac{1}{SumF_{in}} ln(\ q\cdot F_{in} - SumF_{in}\cdot q_j^{Tank}(t))\Big|_{q^{Tank}(0)}^{q^{Tank}(t)} = \frac{t}{V(0)}\Big|_0^t \quad \{Eq.\ 50\}$$

Taking the integral:

$$ln\left(\frac{q\cdot F_{in}-SumF_{in}\cdot q_j^{Tank}(t)}{q\cdot F_{in}-SumF_{in}\cdot q_j^{Tank}(0)}\right) = \frac{-SumF_{in}}{V(0)} t \quad \{Eq.\ 51\}$$

Applying the exponential to each side:

$$\frac{q \cdot F_{in} - SumF_{in} \cdot q_j^{Tank}(t)}{q \cdot F_{in} - SumF_{in} \cdot q_j^{Tank}(0)} = exp\left(-\frac{SumF_{in}}{V(0)}t\right) \qquad \{Eq.\ 52\}$$

Then, rearranging again:

$$q_j^{Tank}(t) = \frac{q \cdot F_{in}}{SumF_{in}} - \left(\frac{q \cdot F_{in}}{SumF_{in}} - q_j^{Tank}(0)\right) exp\left(-\frac{SumF_{in}}{V(0)}t\right) \quad \{Eq.\ 53\}$$

Then, simplifying the notation a bit:

$$q^{Tank}(t) = \bar{q}_{inlet} - \left(\bar{q}_{inlet} - q^{Tank}(0)\right) exp\left(-\frac{SumF_{in}}{V(0)}t\right), \text{ where}$$

$$\bar{q}_{inlet} = \frac{\sum_{inlet\ i=1}^{i=m} q_i F_{in_i}}{\sum_{i=1}^{m} F_{in_i}} = \frac{q \cdot F_{in}}{SumF_{in}} \qquad \{Eq.\ 54\}$$

The next step is to combine the two ordinary differential equation cases. For a subset of cases, the tank property dynamic response is given by:

$$q^{Tank}(t) = f_a(t, q_{inlet}, F_{in}, F_{out}) = \bar{q}_{inlet} - \left(\bar{q}_{inlet} - \right.$$

$$\left. q^{Tank}(0)\right)\left(1 + \frac{\Delta SumF \cdot t}{V(0)}\right)^{\frac{-SumF_{in}}{\Delta SumF}} \quad \{Eq.\ 55\}$$

Equation 55 applies when the sum of inflows and outflows is unequal, meaning that the change in tank volume is simply the product of the time step and ΔSumF. On the other hand, if the sum of inflows and outflows is equal, that is, the volume in the tank is not changing,

$$q^{Tank}(t) = f_b(t, q_{inlet}, F_{in}, F_{out}) = \bar{q}_{inlet} - \left(\bar{q}_{inlet} - \right.$$

$$\left. q^{Tank}(0)\right) exp\left(-\frac{SumF_{in}}{V(0)}t\right) \quad \{Eq.\ 56\}$$

And the step response models can be given by the following. For the tank qualities in relation to inlet qualities there are two equations, one for each case. If ΔSumF is not equal to zero, then:

$$\frac{\partial q^{Tank}(t)}{\partial q_{inlet(i)}} = \frac{\partial f_a(t)}{\partial q_{inlet(i)}} = \frac{F_{in}(i)}{SumF_{in}}\left(1 - \left(1 + \frac{\Delta SumF \cdot t}{V(0)}\right)^{\frac{-SumF_{in}}{\Delta SumF}}\right) \quad \{Eq.\ 57\}$$

On the other hand, if ΔSumF is zero,

$$\frac{\partial q^{Tank}(t)}{\partial q_{inlet(i)}} = \frac{\partial f_b(t)}{\partial q_{inlet_i}} = \frac{F_{in}(i)}{SumF_{in}}\left(1 - exp\left(-\frac{SumF_{in}}{V(0)}t\right)\right) \qquad \{Eq.\ 58\}$$

For the tank qualities in relation to the tank inflows:

$$\frac{\partial q^{\text{Tank}}(t)}{\partial F_{in}(i)} = \frac{\partial f_a(t)}{\partial F_{in}(i)} = \left(q^{Tank}(0) - \bar{q}_{in}\right)\left(1 + \right.$$

$$\left.\left(\frac{\Delta SumF \cdot t}{V(0)}\right)^{\frac{-SumF_{in}}{(\Delta SumF)}}\left[\frac{SumF_{out}}{(\Delta SumF)^2}\,ln\left(1 + \frac{\Delta SumF \cdot t}{V(0)}\right) - \right.\right.$$

$$\left.\left.\frac{SumF_{in}}{\Delta SumF}\left(\frac{t}{V(0)+\Delta SumF \cdot t}\right)\right] + \frac{q_{in}(i)-\bar{q}_{in}}{SumFin}\left[1 - \left(1 + \right.\right.\right.$$

$$\left.\left.\left(\frac{\Delta SumF \cdot t}{V(0)}\right)^{\frac{-SumF_{in}}{(\Delta SumF)}}\right]\right., \forall\ \Delta SumF \neq 0 \qquad \{\text{Eq. 59}\}$$

And:

$$\frac{\partial q^{\text{Tank}}(t)}{\partial F_{in}(i)} = \frac{\partial f_b(t)}{\partial F_{in}} = \frac{\left(q_{inlet}-q^{Tank}(0)\right)\cdot t}{V(0)}\,exp\left(-\frac{SumF_{in}}{V(0)}t\right.$$

$$\left.\right) + \frac{q_{in}(i)-\bar{q}_{in}}{SumFin}\left[1 - exp\left(1 + \frac{SumF_{in}\cdot t}{V(0)}\right)\right], \ \forall\ \Delta SumF = 0 \{\text{Eq. 60}\}$$

For tank quality in relation to outflow:

$$\frac{\partial q^{\text{Tank}}(t)}{\partial F_{out}(i)} = \frac{\partial f_a(t)}{\partial F_{out}(i)} = \left(\bar{q}_{in} - q^{Tank}(0)\right)\left(1 + \right.$$

$$\left.\left(\frac{\Delta SumF \cdot t}{V(0)}\right)^{\frac{-SumF_{in}}{\Delta SumF}}\left[\frac{SumF_{in}}{(\Delta SumF)^2}\,ln\left(1 + \frac{\Delta SumF \cdot t}{V(0)}\right) - \right.\right.$$

$$\left.\left.\frac{SumF_{in}}{\Delta SumF}\left(\frac{t}{V(0)+\Delta SumF \cdot t}\right)\right], \forall\ \Delta SumF \neq 0 \{\text{Eq. 61}\}$$

And:

$$\frac{\partial q^{\text{Tank}}(t)}{\partial F_{out}(i)} = \frac{\partial f_b(t)}{\partial F_{out}(i)} = 0, \forall\ \Delta SumF = 0\ \{\text{Eq. 62}\}$$

These step equations can then be applied within the model predictive controller to estimate system states throughout the time horizon. The sampling time and the time horizon can be set to match those of the model predictive control, depending on how the model predictive control is tuned. In an illustrative example, a 15 minute time horizon with one hundred sample points (interval of 9 seconds) may be used. Other sampling times, quantity of samples, and time horizons can be used, as noted.

Tank inlet, tank contents, and tank outlet qualities may include any suitable measurable parameter, such as percentage concentrations of the various components of a blend or mix. Physical parameters, such as density, viscosity, surface tension, vapor pressure, boiling point, freezing point, compressibility, and specific heat capacity may be determined using percentage concentrations or may be tracked or measured without necessarily referencing constituent parts of the liquid. Some qualities (viscosity and density for example) affect flow estimates based on models and various calculations or equations (such as the Bernoulli equations that are used in many measurement or estimation steps). Enhancing the modelling in the control system can also be useful to support such flow determining processes in a dynamic environment. For example, the systems state(s) that are estimated as inputs to the model predictive control may in addition be used as estimates input to models for other flow determining processes (including estimating, measuring or calculating flow through pipes, valves, pumps and/or measurement devices).

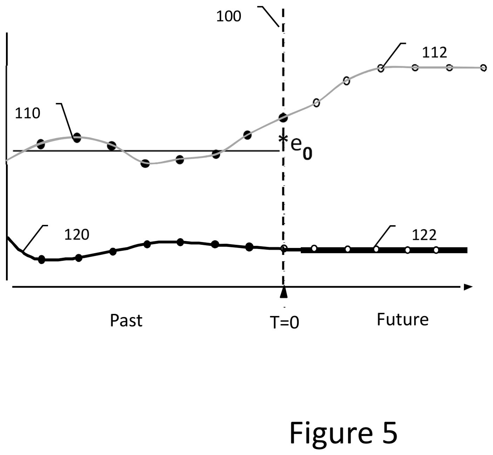

Figure 5 is a graph showing changes in tank contents over time. The contents of a tank at any given time are fully determined by its current state. No past values are required to determine the current state at time 0. The upper line on the graph, at 110, shows a response in which the value changes after time T=0 until reaching steady state as shown at 112, as a latent response to past inputs. Instead, the response for a tank is more similar to that shown at 120, in which the system state is stable from T=0 forward, assuming no inputs or outputs from the system occur. As a result, the projected states as shown at 122 are stable following the first time instance.

With this being the case, and no need to determine latent effects, the tank property dynamic responses for a multiple inlet/outlet system can be used. Equations 55 (for a non-zero sum of flows) or 56 (for zero sum flow) are the implemented in the model predictive control scheme, with the understanding that the standard model predictive control approach has been modified here to separate between a first state (non-zero sum of flows) and second state (zero sum flows). Moreover, the implementation will use Equations 55 or 56 as the unforced future prediction, y_ufp. Then the step response model (coefficients that are used in the current interval are given by Equations 57, 59 and 61 in the non-zero sum of flows state, and 58, 60 and 62 in the zero sum of flows state.

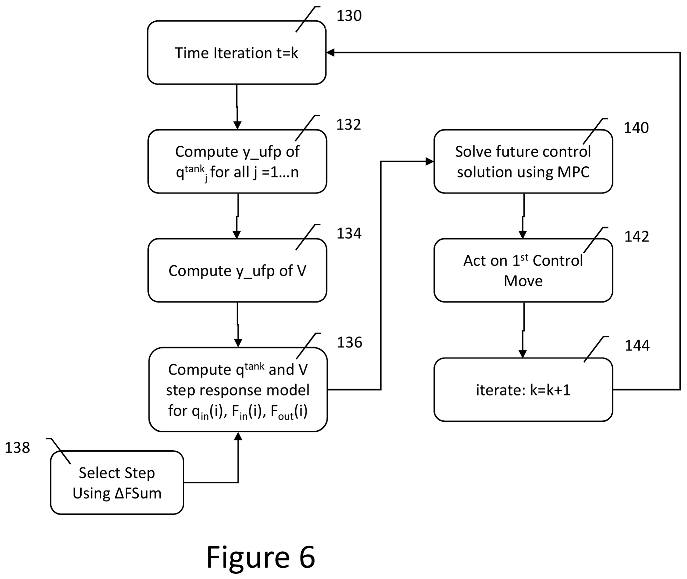

Figure 6 is a block flow diagram for a method. The tank properties are a non-linear system variables, even when all properties follow a linear blending law. A method as illustrated in Figure 6 may be used within a model predictive control framework to solve the non-linear tank property problem. A piece-wise linearization model predictive control can be used.

Starting at block 130, at time iteration t=k (or t=0, if using a receding time horizon notation) is set. The unforced prediction, y_ufp, of the tank properties is computed for each of the properties under analysis, that is, for j = 1...n, as indicated at 132. Next, the unforced prediction y_ufp is also calculated for the tank level or holdup (either description can be used herein), V, as indicated at 134.

At 136, the tank property(j) and tank holdup step response models are computed with respect to the tank, $q_{in}(i)$, the inflows $F_{in}(i)$, and the outflows, $F_{out}(i)$. Block 136 may include a determination of whether the tank inflow mass/volume is equal to the tank outflow mass/volume, which determines which of the step response models described previously is to be used, as indicated at 138. Block 138 again uses the notation that $\Delta$FSum is the difference between the summed inflows into the tank, and the summed outflows from the tank. The inclusion of block 138 allows the model predictive control methodology to be implemented in the system without the need to rely on the Euler approximation, which creates the errors and extra work discussed previously.

With the step response in hand, at block 140 the future control solution is determined by model predictive control methods, such as using Equation 1, above. The first control action is then taken as indicated at 142. Control actions may include, for example and without limitation, issuing commands to one or more actuators for one or more valves on inflow or outflow pipes, issuing commands to turn on, turn off, or adjust speed or other parameters of one or more pumps. Other commands or alerts may be generated as well, if desired.

The method then iterates to the next time instance, as indicated at 144. Even though the model predictive control analysis considers a time horizon with a number of time steps, and finds a least cost control solution through the entire time horizon, only the first control action is usually implemented. The method then iterates, and a new set of operating states are obtained and the procedure begins again. The duration allotted for each iteration may vary. For example, the method may iterate at intervals of one second to thirty minutes, or shorter or longer, as desired. The method returns then to block 130.

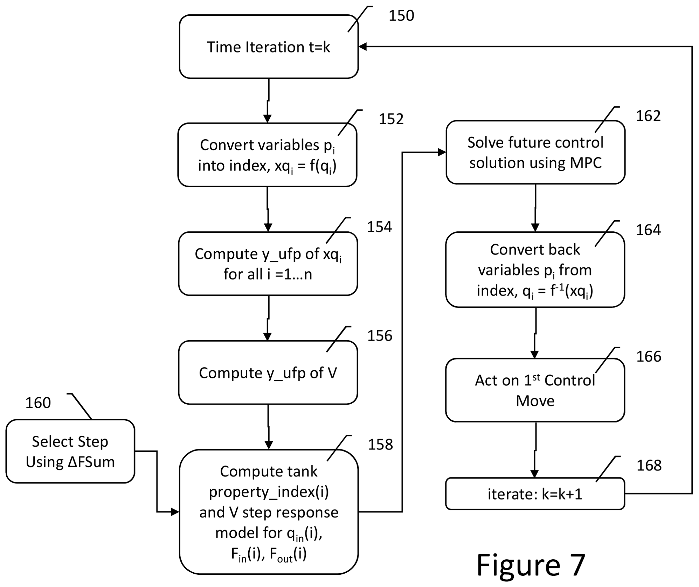

Figure 7 is a block flow diagram for another method. Here, index blending is addressed. Index blending is a process that uses blending indices to calculate the overall properties of a petroleum blend based on the properties of its components. A blending index is a formula that transforms measured component properties into numbers that can be averaged together to calculate the index value of the mixture. The formula is often a log or power function, which means that values at the far ends of the scale have a much greater impact on the combined value.

$$p_j^{\text{inline}} = f^{-1}\left(q_j^{blended}\right) = f^{-1}\left(\frac{\sum_{i=1}^m f(p_{j,i})F_{in_i}}{\sum_{i=1}^m F_{in_i}}\right) \qquad \{\text{Eq. 63}\}$$

The properties of each material - that is, the inflows, outflows, and tank contents (outflows and tank contents may be treated as having the same material properties), are converted into quality indexes as $q_i = f(p_i)$ for each of i = 1...n. Equation 63 shows how the index is then generated by converting the properties to the quality indexes, blending linearly, and then inversely converting back from the quality indexes back to the properties.

Turning to Figure 7, at the time iteration, t=k 150, the method starts. First, the variables, $p_i$, are converted into the index variables, $xq_i = f(q_i)$, as indicated at 152. Next, the unforced prediction, y_ufp, of the tank properties xq(i) for all i= 1...n is calculated, as indicated at block 154. The unforced prediction, y_ufp, is also calculated for the tank level, V, as indicated at 156.

Next, the step response models are determined at 158. Here, as indicated at 160 the step model to use can be determined by reference to $\Delta$FSum, as described above in several examples. The inclusion of block 160 allows the model predictive control methodology to be implemented in the system without the need to rely on the Euler approximation, which creates the errors and extra work discussed previously. Here, the tank property(j) and tank level, V are computed as well as the step response models for the tank, $q_{in}(i)$, the inflows $F_{in}(i)$, and the outflows, $F_{out}(i)$.

The future control solution is then solved at block 162. Before the solution can be implemented, the index blending models need to be addressed. At block 164 the index is converted back to the variables, using the inverse function as shown in the drawing.

The first control action calculated at 162 is then implemented, as indicated at 166. Control actions may include, for example and without limitation, issuing commands to one or more actuators for one or more valves on inflow or outflow pipes, issuing commands to turn on, turn off, or adjust speed or other parameters of one or more pumps. Other commands or alerts may be generated as well, if desired.

The method then iterates to the next time instance, as indicated at 168. Even though the model predictive control analysis considers a time horizon with a number of time steps, and finds a least cost control solution through the entire time horizon, only the first control action is usually implemented. The method iterates, and a new set of operating states are obtained and the procedure begins again. The duration allotted for each iteration may vary. For example, the method may iterate at intervals of one second to thirty minutes, or shorter or longer, as desired. The method returns then to block 150.

As described above, the model predictive control analysis considers actions across a time horizon. In the context of industrial refinery, blending, and/or chemical plant operations, the time horizon can be rather long, with several hours considered, for example. If, for example, a 4 hour time horizon is considered, the errors introduced by the Euler approximation become large and impactful.

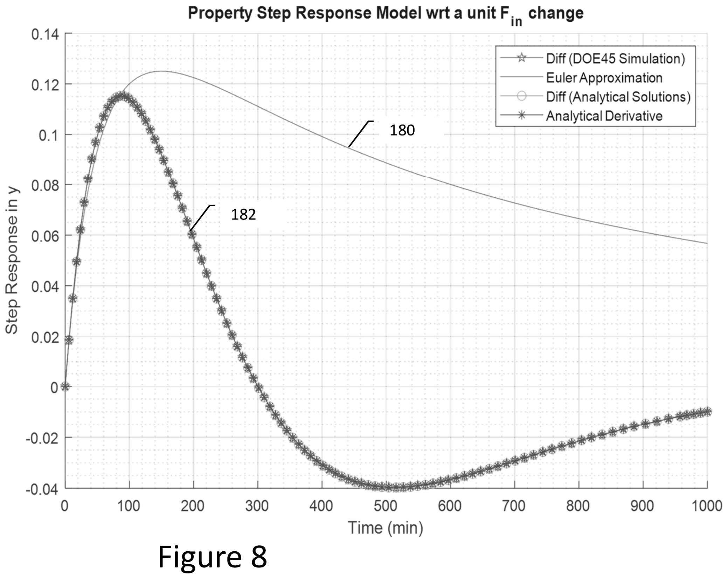

Figure 8 shows property step response with a unit change in the inlet flow for a single pipe inlet, single pipe outlet system. The step response as determined using the Euler approximation is shown at 180. At 182 are the lines for each of the above described derived solution, as well as using a numerical ordinary-differential-equation solution. In the scale shown, the above realized set of solutions and the analytical solution closely track one another. It may be noted that the analytical solution would require use of a very detailed set of models and analysis and would not be practical for implementation. While line 180 generally tracks to the analytical solution for initial time frame (here, about 50 minutes), the divergence that follows is quite large. This divergence would greatly undermine the analysis of costs across the time horizon, assuming, for example, a time horizon of 100 minutes or more.

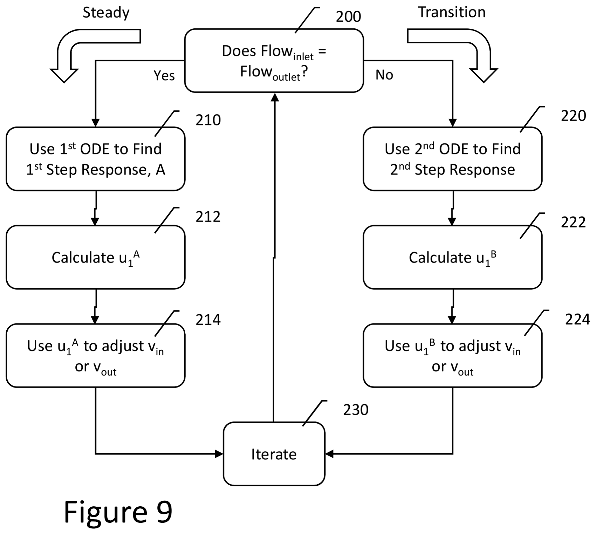

Figure 9 is a block flow diagram for a method. At block 200, the method determines whether the mass flow in the inlet(s) is equal to the mass flow in the outlet(s) of the tank. The query at 200 may take several forms and may contemplate more than one inlet and/or more than one outlet from the tank. The definition of "equal" here may contemplate the flow in as equal to the flow out if the difference between the two is less than some marginal or relatively small value, which may be absolute or relative. "Absolute" may indicate a constant threshold is applicable to the determination of equal or unequal. "Relative" may mean, for example, that the difference in flows, whether measured in mass or volume, is less than a predetermined percentage of the inlet flow or outlet flow, such as less than 5%, 4%, 3%, 2%, 1%, or some other fraction. An absolute limit may be fixed and proportionate to other values in the system, such as using a relatively small percentage of maximum inlet flow or maximum outlet flow (5%, 4%, 3%, 2%, 1%, or some other fraction, as desired).

If the determination at 200 is that the inlet and outlet masses are equal, then a first ordinary differential equation is used to then derive or otherwise determine a first step response, A, as indicated at 210. A set of control actions is then determined, as indicated at 212, where $u_1{}^A$ indicates the set of control actions for the 1st step response, A. In the preceding discussions, for example, the formulas at 24-28, 30(b), 50-54, 56, 58, 60 and 62 show processes for analyzing the step function when the inlet flows are equal to the outlet flows for the tank. These control actions from block 212 are selected by optimizing using a model predictive control analysis and/or controller. The first control action is then implemented as shown at 214 to affect one or more of the mass flows into or out of the tank. Changes may affect all the inflows (if plural inlets are present) and/or outflows, as desired, or less than all of the inflows or outflows, when implemented at 214. The method then iterates at 230, and returns to the original query at 200.

If the determination at 200 is that the inlet and outlet masses are not equal, then a second ordinary differential equation is used to then derive or otherwise determine a second step response, B, as indicated at 220. A set of control actions is then determined, as indicated at 222, where $u_1{}^B$ indicates the set of control actions for the 2nd step response, B. In the preceding discussions, for example, the formulas at 19-23, 30(a), 45-49, 55, 57, 59 and 61 show processes for analyzing the step function when the inlet flows are equal to the outlet flows for the tank. These control actions from block 222 are selected by optimizing using a model predictive control analysis and/or controller. The first control action is then implemented as shown at 224 to affect one or more of the mass flows into or out of the tank. Changes may affect all the inflows (if plural inlets are present) and/or outflows, as desired, or less than all of the inflows or outflows, when implemented at 224. The method then iterates at 230, and returns to the original query at 200.

In an illustrative example, the system receives a plurality of inputs from a controller, indicating, for example, the desired properties of materials in the tank. The analysis starts with the known properties of materials in the tank, using data stored from previous iterations of the control method and/or determined from measurements or analysis of the tank contents or outflow of the tank. Actual volume in the tank may be measured or may be known from prior iterations that include estimated volumes.

Further inputs to the system analytics include the actual qualities of each of the inflows to the tank, which can come from other tanks, reservoirs, barrels, mixers, and/or the distillation source in the facility. The capabilities of each inflow (or outflow) pipe may be known and can be integrated in the model predictive controller as hard limits on any control actions. For example, any given pipe (outlet or inlet) has a maximum flow it can carry, in view of the material properties of the product flowing therein as well as structural factors of the pipe itself, such as internal dimensions, materials, pressure capabilities, etc. Moreover, for a given pipe, there may be additional constraints based on, for example, the presence or absence of valves, pumps, and/or distance and elevation changes relative to a previous tank. Referring briefly to Figure 1, for example, the maximum flow rate for lubricant base stocks through a given pipe having given pipe dimensions/geometry, valve and/or pumps, will be less than the maximum flow rate for gasoline, due to differences in viscosity of each. Thus, maximum flow that can be obtained for each inlet pipe can be used as a constraint in the model predictive controller.

Another constraint that would be input is the maximum and/or minimum tank level for the tank being controlled by a given model predictive controller. Further constraints may be applied to given ones of the inlets and/or outlets in view of material properties of the product flowing therein. While most materials in the system will be incompressible, for safety and/or other reasons, there may be limits on maximum (or minimum, optionally) pressure within a given pipe, for example. If desired, constraints may be applied using penalties in the model predictive control, or these may be treated as outright constraints which cannot be violated.

Based on business or economic reasons, a given tank may be used to obtain a desired blend of the intake materials. Those materials shown in Figure 1 are illustrative of what can be obtained from the distillation chamber 12. In an operating system or refinery, there may also be additives obtained from other sources provided to the blending 18 or other processes. These may be introduced from additional tanks or containers as needed. For example, a refinery may use any of a range of available and commercially known antioxidants, cold-flow and conductivity improvers, dehazers, hydrogen sulfide and mercaptan scavengers, octane and cetane improvers, lubricity improvers, metal deactivators, diesel stabilizers and corrosion inhibitors. That is, not all the products used in blending 18 would necessarily come from distillation 12.

A tank can be a final product tank 20 or may be used in any intermediate or even preliminary stage of the blending 18. The desired blend to obtain may be specified in terms of the qualities of the blended material as well as the quantity to obtain.

Continuing the example, then, the model predictive controller can receive the inputs from an overall facility or system controller with requested tank content qualities and requested volume, for example, as well as the various inputs that would define the available inlet flow volumes (maximum, minimum, and current setting for example) and inlet flow qualities. Using these inputs, a control solution is identified for achieving the desired tank blend. If desired, there may be additional inputs for how quickly the blend is to be achieved and whether or not product outflows are to be obtained while the blend is formulated in a given tank.

Material outflow may be a received constraint or parameter for the control process. For example, with an intermediate tank, there may be downstream processes also subject to changes as separate controller schemes may be directed to each tank in a system. With an output tank, for example, material outflow may cease when a truck, barrel, pipeline, etc. is stopped, full, or not present, for example. This variation in the downstream process is one of the reasons that the nature of tank control is complex, as it is desirable to economically reach the desired blend in the tank quickly, but there is no assurance in the system that outlet flows will be zero as the desired blend is being mixed in the tank, for example.

In examples, there will be ongoing changes during the process, as the materials coming into the tank will at least initially be different from the desired outputs as the inputs need to deliver qualities allowing the tank contents to change. As the time proceeds forward, assuming no changes to the requested blend, the system may eventually reach a steady state of operation in which the inlet quantity and qualities are equal to the outlet quantity and qualities, until updated/new requests are received from the overall system controller. When the steady state is reached, the inlet mass will equal the outlet mass. In view thereof, the arrows for steady operation (inlet mass/flow equals outlet mass/flow) and transitional operation (unequal inlet mass/flow and outlet mass/flow) are highlighted. Thus it is contemplated that the method of Figure 9 may include one or many initial iterations in which the path followed is block 200, block 220 (because inlet flow/mass and outlet flow/mass are unequal), block 222, block 224, and block 230, with return to block 200. As the steady state is neared or reached, the path instead becomes block 200, block 210 (because inlet flow/mass and outlet flow/mass are equal at steady state), block 212, block 214, and block 230, with return to block 200.

It may be understood, however, that each branch in Figure 9 is not limited to use in transition or steady states. For example, when mass flow entering and exiting is the same, this may still be part of a transitional stage, as the inlet material qualities may differ from the outlet material qualities. Likewise, the mass flows can be unequal when a generally steady quality state is reached, as the tank may be filling while other downstream processes are modifying.

As can be understood from the preceding, the step response becomes very important, as all the operations in the system are well controlled except for the inputs from the system controller. The system controller inputs may themselves be a step function, as the system controller with change from one requested blend and quantity request to another, typically, in a single step.

Each of these non-limiting examples can stand on its own, or can be combined in various permutations or combinations with one or more of the other examples.

The above detailed description includes references to the accompanying drawings, which form a part of the detailed description. The drawings show, by way of illustration, specific embodiments. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls. In this document, the terms "a" or "an" are used, as is common in patent documents, to include one or more than one, independent of any other instances or usages of "at least one" or "one or more." Moreover, in the claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or nonvolatile tangible computer-readable media, such as during execution or at other times. Examples of these tangible computer-readable media can include, but are not limited to, hard disks, removable magnetic or optical disks, magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims.

Also, in the above Detailed Description, various features may be grouped together to streamline the disclosure. This should not be interpreted as intending that an unclaimed disclosed feature is essential to any claim. Rather, innovative subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the protection should be determined with reference to the appended claims, along with the full scope of equivalents to which such claims are entitled.

**Claims**

1. A method of controlling a tank, the tank holding a volume of tank material having tank material properties, the tank receiving inlet flow material having inlet flow material properties from at least one inlet flow pipe, and releasing an outlet flow material to at least one outlet flow pipe, the method comprising:

   determining whether a mass of the inlet flow material equals a mass of the outlet flow material and in response:

   if the mass of inlet flow material equals the mass of outlet flow material, applying a first set of ordinary differential equations and analytical or numerical solutions thereof to determine a first tank step response model for the tank volume of material and for the properties of the tank material;
   if the mass of inlet flow material does not equal the mass of outlet flow material, applying a second set of ordinary differential equations and analytical or numerical solutions thereof to determine a second tank step response model for the tank volume of material and for the properties of the tank material;

   performing a model predictive control process using either the first tank step response model or the second tank step response model to determine control actions for one or more valves or pumps controlling the at least one inlet flow pipe and at least one outlet flow pipe; and
   executing a first one of the control actions to control flow through the at least one inlet flow pipe or the at least one outlet flow pipe before proceeding to a next time iteration.

2. The method of claim 1, wherein the step of performing the model predictive control process comprises, at a time iteration:

computing an unforced prediction of properties of the material in the tank;
computing an unforced prediction of volume of the material in the tank; and
solving a future control solution to determine the control actions.

3. The method of either of claims 1 or 2, wherein the step of executing a first one of the control actions comprises modifying a position of a valve in an inlet flow pipe.

4. The method of any of claims 1-3, wherein the step of executing a first one of the control actions comprises turning on, turning off, or adjusting a speed of a pump in an inlet flow pipe.

5. The method of any of claims 1-4, wherein the step of executing a first one of the control actions comprises modifying a position of a valve in an outlet flow pipe.

6. The method any of claims 1-5, wherein the at least one inlet flow pipe comprises at least a first inlet flow pipe carrying a first material having first properties, and a second inlet flow pipe carrying a second material having second properties different from the first properties.

7. The method of claim 6, wherein the step of performing the model predictive control process comprises, at a time iteration:

converting a first set of variables representing the first properties into a first blending index, and a second set of variables representing the second properties into a second blending index;
computing an unforced prediction of properties of the material in the tank using the first blending index and the second blending index;
computing an unforced prediction of volume of the material in the tank;
solving a future control solution to determine the control actions; and
converting the first index back to the first properties and the second index back to the second properties.

8. A method of controlling a tank, the tank holding a volume of tank material having tank material properties, the tank receiving inlet flow material having inlet flow material properties from at least one inlet flow pipe, and releasing an outlet flow material to at least one outlet flow pipe, the method comprising:

receiving an instruction to change the tank material properties;
during a first time period, determining that a mass of the inlet flow material does not equal a mass of the outlet flow material and, in response:

applying a first set of ordinary differential equations and analytical or numerical solutions thereof to determine a first tank step response model for the tank volume of material and for the properties of the tank material;
performing a model predictive control process using the first tank step response model to determine first control actions for one or more valves or pumps controlling the at least one inlet flow pipe and at least one outlet flow pipe; and
executing a first one of the first control actions to control flow through the at least one inlet flow pipe or the at least one outlet flow pipe;

during a second time period after the first time period, determining that a mass of the inlet flow material does equal a mass of the outlet flow material and, in response:

applying a second set of ordinary differential equations and analytical or numerical solutions thereof to determine a second tank step response model for the tank volume of material and for the properties of the tank material;
performing a model predictive control process using the second tank step response model to determine second control actions for one or more valves or pumps controlling the at least one inlet flow pipe and at least one outlet flow pipe; and
executing a first one of the second control actions to control flow through the at least one inlet flow pipe or the at least one outlet flow pipe.

9. The method of claim 8, wherein:

during the first time period, at least two iterations of the applying, performing and executing steps are performed; and

during the second time period, at least two iterations of the applying, performing and executing steps are performed.

10. The method either of claims 8-9, wherein the step of performing the model predictive control process comprises, at each time iteration:

computing an unforced prediction of properties of the material in the tank;
computing an unforced prediction of volume of the material in the tank; and
solving a future control solution to determine the control actions.

11. The method of any of claims 8-10, wherein the step of executing a first one of the first control actions or a first one of the second control actions comprises modifying a position of a valve in an inlet flow pipe.

12. The method of any of claims 8-10, wherein the step of executing a first one of the first control actions or a first one of the second control actions comprises turning on, turning off, or adjusting a speed of a pump in an inlet flow pipe.

13. The method of any of claims 8-10, wherein the step of executing a first one of the first control actions or a first one of the second control actions comprises modifying a position of a valve in an outlet flow pipe.

14. The method of any of claims 8-10, wherein the at least one inlet flow pipe comprises at least a first inlet flow pipe carrying a first material having first properties, and a second inlet flow pipe carrying a second material having second properties different from the first properties.

15. The method of claim 14, wherein the steps of performing the model predictive control process comprise, at a time iteration:

converting a first set of variables representing the first properties into a first blending index, and a second set of variables representing the second properties into a second blending index;
computing an unforced prediction of properties of the material in the tank using the first blending index and the second blending index;
computing an unforced prediction of volume of the material in the tank;
solving a future control solution to determine the control actions; and
converting the first index back to the first properties and the second index back to the second properties.

Figure 1

EP 4 745 706 A1

EP 4 745 706 A1

44

$F_i(t)$

40

42

$V(t)$

$P(t)$

$F_o(t)$

46

48

$u(t)$

System

$y(t)$

Figure 2

If abs(ΔF) > tolerance (default =1e-4) use analytical derivative equations

$$\frac{\partial q^{\text{Tank}}(t)}{\partial F_{in}} = -\left(q_{inlet} - q^{\text{Tan}k}(0)\right)\left(1+\frac{\Delta F \cdot t}{V(0)}\right)^{\frac{-F_{in}}{(\Delta F)}}\left[\frac{F_{out}}{(\Delta F)^2}\ln\left(1+\frac{\Delta F \cdot t}{V(0)}\right)-\frac{F_{in}}{\Delta F}\left(\frac{t}{V(0)+\Delta F \cdot t}\right)\right]$$

$$\frac{\partial q^{\text{Tank}}(t)}{\partial F_{out}} = \left(q_{inlet} - q^{\text{Tan}k}(0)\right)\left(1+\frac{\Delta F \cdot t}{V(0)}\right)^{\frac{-F_{in}}{(\Delta F)}}\left[\frac{F_{in}}{(\Delta F)^2}\ln\left(1+\frac{(\Delta F)\cdot t}{V(0)}\right)-\frac{F_{in}}{\Delta F}\left(\frac{t}{V(0)+\Delta F \cdot t}\right)\right]$$

, where $\Delta F = F_{in} - F_{out}$

else switch to a numerical perturbation method using:

$$\frac{\partial q^{\text{Tank}}(t)}{\partial F_{in}} = \frac{f_a(t,q_{inlet},F_{in}+\Delta h,F_{out}) - f_a(t,q_{inlet},F_{in},F_{out})}{\Delta h}$$

$$\frac{\partial q^{\text{Tank}}(t)}{\partial F_{out}} = \frac{f_a(t,q_{inlet},F_{in},F_{out}+\Delta h) - f_a(t,q_{inlet},F_{in},F_{out})}{\Delta h}$$

, where $\Delta h$ = Perturbation

end

# Figure 3

Figure 4

EP 4 745 706 A1

Figure 5

EP 4 745 706 A1

Figure 6

130 — Time Iteration t=k

132 — Compute y_ufp of $q^{tank}_j$ for all j =1...n

134 — Compute y_ufp of V

136 — Compute $q^{tank}$ and V step response model for $q_{in}(i)$, $F_{in}(i)$, $F_{out}(i)$

138 — Select Step Using ΔFSum

140 — Solve future control solution using MPC

142 — Act on 1st Control Move

144 — iterate: k=k+1

EP 4 745 706 A1

```
                    ┌─────────────────┐ 150
                    │ Time Iteration  │ ◄──────────────────────┐
                    │     t=k         │                        │
                    └────────┬────────┘                        │
                             │                                 │
                    ┌────────▼────────┐ 152     ┌──────────────┴──┐ 162
                    │ Convert         │         │ Solve future    │
                    │ variables pᵢ    │ ──────► │ control         │
                    │ into index,     │         │ solution using  │
                    │ xqᵢ = f(qᵢ)     │         │ MPC             │
                    └────────┬────────┘         └────────┬────────┘
                             │                           │
                    ┌────────▼────────┐ 154     ┌────────▼────────┐ 164
                    │ Compute y_ufp   │         │ Convert back    │
                    │ of xqᵢ          │         │ variables pᵢ    │
                    │ for all i =1…n  │         │ from index,     │
                    └────────┬────────┘         │ qᵢ = f⁻¹(xqᵢ)   │
                             │                  └────────┬────────┘
                    ┌────────▼────────┐ 156              │
                    │ Compute y_ufp   │         ┌────────▼────────┐ 166
                    │ of V            │         │ Act on 1st      │
                    └────────┬────────┘         │ Control Move    │
                             │                  └────────┬────────┘
  ┌──────────────┐ 160       │                           │
  │ Select Step  │   ┌───────▼──────────┐ 158  ┌─────────▼────────┐ 168
  │ Using ΔFSum  │──►│ Compute tank     │      │ iterate: k=k+1   │─┘
  └──────────────┘   │ property_index(i)│      └──────────────────┘
                     │ and V step       │
                     │ response model   │
                     │ for qᵢₙ(i),      │
                     │ Fᵢₙ(i), Fₒᵤₜ(i)  │
                     └──────────────────┘
```

Figure 7

Figure 8

EP 4 745 706 A1

Steady

Transition

200

Does Flow$_{inlet}$ = Flow$_{outlet}$?

Yes

No

210
Use 1$^{st}$ ODE to Find 1$^{st}$ Step Response, A

220
Use 2$^{nd}$ ODE to Find 2$^{nd}$ Step Response

212
Calculate $u_1^A$

222
Calculate $u_1^B$

214
Use $u_1^A$ to adjust $v_{in}$ or $v_{out}$

224
Use $u_1^B$ to adjust $v_{in}$ or $v_{out}$

230
Iterate

Figure 9

Europäisches
Patentamt
European
Patent Office
Office européen
des brevets

## EUROPEAN SEARCH REPORT

**Application Number**

EP 25 21 4237

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 812 428 A (ZOU HEHONG [US] ET AL) 22 September 1998 (1998-09-22) * Column 2 lines 35, 66, column 3 lines 30-33, 46-47, 61-66, column 4 equation 1, column 5 lines 1-5, column 9 lines 10-12, Figure 1. * ----- | 1-15 | INV. G05D9/12 G05B13/04 |
| A | EFHEIJ HAFED ET AL: "Comparison of Model Predictive Control and PID Controller in Real Time Process Control System", 2019 19TH INTERNATIONAL CONFERENCE ON SCIENCES AND TECHNIQUES OF AUTOMATIC CONTROL AND COMPUTER ENGINEERING (STA), IEEE, 24 March 2019 (2019-03-24), pages 64-69, XP033551409, DOI: 10.1109/STA.2019.8717271 [retrieved on 2019-05-16] * Abstract, page 68 right column last paragraph * ----- | 1-15 | |

**TECHNICAL FIELDS SEARCHED (IPC)**

G05D
G05B
B60K
B67D

The present search report has been drawn up for all claims

| Place of search | Date of completion of the search | Examiner |
|---|---|---|
| Munich | 3 February 2026 | Roch, Vincent |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 4237

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2026

| Patent document cited in search report | | Publication date | Patent family member(s) | | Publication date |
|---|---|---|---|---|---|
| US 5812428 | A | 22-09-1998 | CA | 2229937 A1 | 27-03-1997 |
| | | | DE | 69622177 T2 | 31-10-2002 |
| | | | EP | 0852030 A1 | 08-07-1998 |
| | | | US | 5812428 A | 22-09-1998 |
| | | | WO | 9711414 A1 | 27-03-1997 |

EPO FORM P0459

For more details about this annex : see Official Journal of the European Patent Office, No. 12/82